# EUROPÄISCHE PATENTSCHRIFT

(11) **EP 2 871 806 B1**
(45) Veröffentlichungstag und Bekanntmachung des Hinweises auf die Patenterteilung: **26.05.2021**
(21) Anmeldenummer: 14190474.8
(22) Anmeldetag: 27.10.2014
(51) Int. Cl.: H04L 12/413, H04L 12/407, H04L 12/853, H04J 3/06, G06F 9/48

(54) **VERFAHREN ZUR ÜBERTRAGUNG VON NACHRICHTEN IN EINEM COMPUTERNETZWERK SOWIE COMPUTERNETZWERK**
METHOD FOR TRANSMITTING MESSAGES IN A COMPUTER NETWORK AND COMPUTER NETWORK
PROCÉDÉ DE TRANSMISSION DE MESSAGES DANS UN RÉSEAU INFORMATIQUE ET RÉSEAU INFORMATIQUE

(30) Priorität: 07.11.2013 AT 507462013
(43) Veröffentlichungstag der Anmeldung: 13.05.2015
(73) Patentinhaber: TTTech Computertechnik AG, 1040 Wien (AT)
(72) Erfinder: Steiner, Wilfried, 1040 Wien (AT); Forster, Wolfgang, 2051 Zellerndorf (AT)
(74) Vertreter: Patentanwaltskanzlei Matschnig & Forsthuber OG

(56) Entgegenhaltungen:
- US-A1- 2010 281 130
- KOPETZ H ET AL: "The Time-Triggered Ethernet (TTE) Design", OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA,IEEE, 18. Mai 2005 (2005-05-18), Seiten 22-33, XP010801230, DOI: 10.1109/ISORC.2005.56 ISBN: 978-0-7695-2356-9
- HENZINGER T A ET AL: "Giotto: a time-triggered language for embedded programming", PROCEEDINGS OF THE IEEE, IEEE. NEW YORK, US, 1. Januar 2003 (2003-01-01), Seiten 84-99, XP002607193, ISSN: 0018-9219, DOI: 10.1109/JPROC.2002.805825 [gefunden am 2003-01-01]
- ABDELZAHER T F ET AL: "COMBINED TASK AND MESSAGE SCHEDULING IN DISTRIBUTED REAL-TIME SYSTEMS", IEEE TRANSACTIONS ON PARALLEL AND DISTRIBUTED SYSTEMS, IEEE SERVICE CENTER, LOS ALAMITOS, CA, US, Bd. 10, Nr. 11, 1. November 1999 (1999-11-01), Seiten 1179-1191, XP000875260, ISSN: 1045-9219, DOI: 10.1109/71.809575

## Beschreibung

Die Erfindung betrifft ein Verfahren zur Übertragung von Nachrichten in einem Computernetzwerk gemäß den Merkmalen des Anspruchs 1.

Weiters betrifft die Erfindung ein Computernetzwerk gemäß den Merkmalen des Anspruchs 8.

Die vorliegende Erfindung liegt im Bereich der Computertechnik. Sie beschreibt ein innovatives Verfahren und unterstützende Hardware, um Rechenfunktionen, insbesondere aufwändige Rechenfunktionen, wie zum Beispiel kryptographische Funktionen, kosteneffizient in Sternkopplern zu implementieren.

Ein Computernetzwerk sowie ein Verfahren zur Übertragung von Nachrichten in einem solchen Computernetzwerk sind z.B. bekannt aus der US 2010/281130 A1 oder aus dem Dokument KOPETZ H ET AL: "The Time-Triggered Ethernet (TTE) Design", OBJECT-ORIENTED REAL-TIME DISTRIBUTED COMPUTING, 2005. ISORC 2005. EIGHTH IEEE INTERNATIONAL SYMPOSIUM ON SEATTLE, WA, USA 18-20 MAY 2005, PISCATAWAY, NJ, USA,IEEE.

Die Erfindung liegt im Bereich verteilter Echtzeitsysteme, wobei ein solches Echtzeitsystem aus zwei Arten von aktiven Komponenten besteht: Rechenknoten und Sternkopplern. Rechenknoten exekutieren Funktionen wie zum Beispiel das Messen von Eigenschaften physikalischer Prozesse mittels geeigneter Sensorik, die Berechnung von Stellgrößen, oder die Aktivierung von Aktuatoren, wie zum Beispiel von Ventilen. Rechenknoten sind mit anderen Rechenknoten und/oder Sternkopplern vorzugsweise mittels bidirektionalen Leitungen verbunden. Des Weiteren können auch Sternkoppler durch bidirektionale Leitungen miteinander verbunden sein. Der Informationsaustausch zwischen Komponenten funktioniert Nachrichten-orientiert und in der folgenden Beschreibung gehen wir davon aus, dass der Informationsaustausch Ethernet Nachrichten verwendet. Nachrichten können unterschiedliche Identitäten haben und alle Nachrichten mit der gleichen Identität bilden einen "Nachrichten Fluss".

In einem derartigen Echtzeitsystem kann zeitgesteuerte Kommunikation implementiert werden, indem die Rechenknoten und Sternkoppler ihre jeweiligen lokalen Uhren zu einer gemeinsamen Zeitbasis synchronisieren und die Nachrichten nach einem festgelegten zeitlichen Plan (dem sogenannten Kommunikationsschedule) entsprechend der gemeinsamen Zeitbasis verschicken. Nachrichten, die derart verschickt werden, werden zeitgesteuerte Nachrichten genannt. Das Kommunikationsschedule wird typischerweise derart erstellt, dass die zeitgesteuerten Nachrichten mit möglichst kurzer und möglichst konstanter Dauer durch das Netzwerk transportiert werden.

Ein Beispiel eines Ethernet-basierten Echtzeitsystems, welches zeitgesteuerte Kommunikation implementiert, ist das TTEthernet Protokoll. Das TTEthernet Protokoll laut Standard SAE AS6802 verwendet die Begriffe "End System" als Synonym für Rechenknoten und "Switch" als Synonym für Sternkoppler. Des Weiteren sind in TTEthernet alle Nachrichten, die zwischen Rechenknoten und Sternkopplern kommuniziert werden, Ethernet Nachrichten.

Die Erstellung und Verarbeitung des Inhalts der Ethernet Nachrichten, die im Computernetzwerk kommuniziert werden, kann Funktionen, typischerweise Rechenfunktionen, insbesondere rechenaufwändige Funktionen COF in dem oder den Sternkopplern bedingen. Ein Beispiel einer rechenaufwändigen Funktion in einem Sternkoppler ist ein kryptographisches Verfahren, wie zum Beispiel in den Standards IEEE 802.1AE und dem Advanced Encryption Standard AES beschrieben. Bei Anwendung genannter Standards kann es notwendig sein, dass eine Ethernet Nachricht, die von einem Sternkoppler empfangen wird und verschlüsselte Daten beinhaltet, vom Sternkoppler entschlüsselt wird und neu, gegebenenfalls mit einem alternativen Schlüssel, wieder verschlüsselt wird. Diese Art der kryptographischen Behandlung von Ethernet Nachrichten und/oder deren Inhalt ist rechenaufwändig und kann zum Beispiel folgende Kosten im Sternkoppler implizieren: große Siliziumfläche, hohe Weiterleitungslatenz der Nachrichten, hoher Energieverbrauch.

Ein Sternkoppler, der Ethernet Nachrichten empfängt und weiterleitet, ist bzw. sollte darüber hinaus im Allgemeinen darauf ausgelegt sein, dass mehrere Ethernet Nachrichten gleichzeitig oder zu überschneidenden Zeiten die rechenaufwändige Funktion nutzen müssen, da Ethernet Nachrichten in einem Sternkoppler meistens zu gleichen Zeiten von mehreren Rechenknoten (und/ oder anderen Sternkopplern) empfangen werden und weitergeleitet werden müssen. Dies führt dazu, dass entweder (a) die rechenaufwändigen Funktionen mehrfach im Sternkoppler implementiert werden müssen, oder (b) die Gesamtanzahl der Ethernet Nachrichten im Computernetzwerk signifikant reduziert werden muss (z.B., ein 1Gbit/sec Ethernet Netzwerk kann nur zu 100 Mbit/sec ausgelastet werden), oder (c) Ethernet Nachrichten im Sternkoppler signifikant länger verzögert werden, bedingt durch Warteschleifeneffekte, oder (d) Ethernet Nachrichten verloren gehen.

Es ist eine Aufgabe der vorliegenden Erfindung, eine kosteneffektive Lösung dieses Problems anzugeben. Darüber hinaus dient die vorliegende Erfindung einer Erhöhung des Determinismus in einem verteilten Echtzeitsystem, sodass das System besser planbar, verifizierbar, validierbar und zertifizierbar wird.

Diese Aufgabe wird mit einem eingangs erwähnten Verfahren erfindungsgemäß mit den Merkmalen des Kennzeichens des Anspruchs 1 sowie mit einem eingangs erwähnten Computernetzwerk erfindungsgemäß mit den Merkmalen des Kennzeichens des Anspruchs 8 gelöst.

Bei den Komponenten kann es sich um Rechenknoten, andere Sternkoppler und Multi-Hop-Netzwerke handeln.

Unter dem Begriff "implementieren" bzw. "eine *Vorrichtung* implementiert eine Funktion" ist zu verstehen, dass diese *Vorrichtung* die Möglichkeit bietet, dass diese Funktion abläuft, d.h., die *Vorrichtung* verfügt über das entsprechende Programm zum Ablauf der Funktion, hat dieses Programm also abgespeichert bzw. auf dieses Zugriff. Die Funktion = das Programm kann a) also im Sternkoppler gespeichert sein oder b) die Funktion = das Programm wird im Sternkoppler ausgeführt.

Unter "mehrfacher Implementierung der Funktion" ist zu verstehen, dass die Funktion mehrfach im Sternkoppler vorhanden sein und entsprechend gleichzeitig mehrfach im Sternkoppler ablaufen kann.

Die Erfindung löst das oben beschrieben Problem, indem die interne Nutzung der Rechenfunktionen, insbesondere der rechenaufwändigen Funktionen eines Sternkopplers mit dem Kommunikationsschedule der zeitgesteuerten Kommunikation gekoppelt wird. D.h., das Kommunikationsschedule wird derart gewählt, dass eine optimale Ausnutzung der vorhandenen Rechenfunktionen, insbesondere rechenaufwendigen Funktionen im Sternkoppler erfolgt.

Bevorzugte Ausführungsformen des erfindungsgemäßen Verfahrens und des erfindungsgemäßen Computernetzwerkes, welche für sich alleine oder in beliebiger Kombination miteinander realisiert sein können, sind im Folgenden beschrieben:
*) ein Sternkoppler implementiert eine Anzahl von funktional äquivalenten Funktionen, wobei diese Anzahl kleiner ist als die Anzahl der Komponenten, mit welchen dieser Sternkoppler gleichzeitig direkt verbunden sein kann. Ein Sternkoppler hat eine Maximalanzahl an Ports, die mit Komponenten verbunden sein können. Je nach Anwendung kann es vorkommen, dass nicht alle Ports des Sternkopplers mit Komponenten verbunden werden. D.h., eine Anwendung kann einen 8-port Sternkoppler verwenden, aber nur an 4 der 8 ports Komponenten verbinden, obwohl eine Verbindung mit 8 ports möglich wäre;
*) aus Gründen der Fehlertoleranz können Funktionen unterschiedlich implementiert werden, aber über die gleiche Funktionalität verfügen. Diese Funktionen sind somit funktional äquivalent, aber nicht identisch. Es kann aber auch vorgesehen sein, dass funktional äquivalente Funktionen identische Funktionen sind;
*) ein Sternkoppler zusätzlich zu der Anzahl von funktional äquivalenten, insbesondere identischen Funktionen COF, insbesondere funktional äquivalenten rechenaufwändigen, beispielsweise identischen rechenaufwändigen Funktionen, die für zeitgesteuerte Ethernet Nachrichten oder Teile der Ethernet Nachrichten verwendet werden, auch eine, zwei oder mehrere dieser Funktionen implementiert, die von nicht zeitgesteuerten Ethernet Nachrichten verwendet werden können;
*) bei der zumindest einen bzw. bei den zwei oder mehreren Funktionen (COF) handelt es sich um eine Funktion bzw. um Funktionen, die den Inhalt zumindest eines Teils der zeitgesteuerten Ethernet Nachrichten, welche als Eingabe Parameter verwendet werden, nach einem kryptographischen Algorithmus verschlüsselt bzw. verschlüsseln;
*) bei der zumindest einen bzw. bei den zwei oder mehreren Funktionen (COF) handelt es sich um eine Funktion bzw. um Funktionen, die den Inhalt zumindest eines Teils der zeitgesteuerten Ethernet Nachrichten nach einem kryptographischen Algorithmus entschlüsselt bzw. entschlüsseln;
*) bei der zumindest einen bzw. bei den zwei oder mehreren Funktionen (COF) handelt es sich um eine Funktion bzw. um Funktionen, die den Inhalt von ein, zwei, oder mehreren zeitgesteuerten Ethernet Nachrichten in ein, zwei, oder mehrere neue Ethernet Nachrichten verpackt bzw. verpacken, wobei vorzugsweise die neuen Ethernet Nachrichten nicht ident sind mit den ursprünglichen Ethernet Nachrichten;
*) in einem Sternkoppler die Weiterleitung(en) von/zu der Funktion oder ihren mehrfachen Implementierungen und/oder das Verarbeiten der Ethernet Nachrichten oder Teilen der Ethernet Nachrichten in der Funktion dadurch aktiviert wird, dass die gemeinsame Zeitbasis vorgegebene Werte erreicht;
*) die von der Funktion (COF) erzeugte eine oder die erzeugten zwei oder mehreren Ethernet Nachrichten sind nicht identisch mit der oder den Ethernet Nachrichten, welche als Eingabe Parameter für die Erzeugung dieser zumindest einen erzeugten Ethernet Nachricht verwendet wird/werden.

Im Folgenden ist die Erfindung an Hand der Zeichnung an Hand einer beispielhaften Realisierung näher erörtert. Es zeigt
Fig. 1 ein Beispiel eines Ethernet Netzwerks, welches zeitgesteuerte Kommunikation implementiert, in dem Rechenknoten mittels bi-direktionaler Kommunikationsleitungen mit einem Sternkoppler verbunden sind,
Fig. 2 ein weiteres Beispiel eines Ethernet Netzwerkes,
Fig. 3 ein Beispiel eines Ethernet Netzwerks, welches zeitgesteuerte Kommunikation implementiert, in dem Rechenknoten mittels redundanten bi-direktionaler Kommunikationsleitungen mit redundanten Sternkopplern verbunden sind,
Fig. 4 ein Diagramm, welches zeitgesteuerte Kommunikation illustriert,
Fig. 5 ein weiteres beispielhaftes Diagramm zur Illustration von zeitgesteuerter Kommunikation,
Fig. 6 einen Teil der internen Struktur eines Sternkopplers,
Fig. 7 ein beispielhaftes Kommunikationsszenario, in welchem ein Sternkoppler eine rechenaufwändige Funktion implementiert,
Fig. 8 ein beispielhaftes Kommunikationsszenario, in dem die Funktion COF zwei Ethernet Nachrichten als Eingabe akzeptiert und aus diesen eine einzige Ethernet Nachricht generiert, und
Fig. 9 ein beispielhaftes Kommunikationsszenario, in dem die Funktion COF eine Ethernet Nachricht als Eingabe akzeptiert und aus dieser zwei Ethernet Nachrichten generiert.

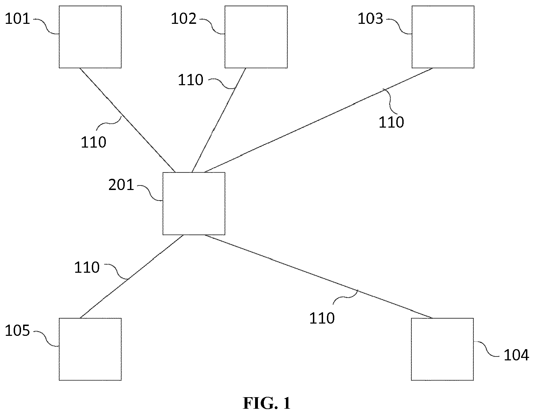

Fig. 1 zeigt ein Beispiel eines Ethernet Netzwerks, in dem Rechenknoten 101 - 105 mittels bi-direktionaler Kommunikationsleitungen 110 mit einem Sternkoppler 201 verbunden sind. Die Rechenknoten 101 - 105 tauschen Ethernet Nachrichten miteinander aus, indem sie diese an den Sternkoppler 201 schicken, und dieser die Nachrichten an die entsprechenden Empfänger weiterleitet. Des Weiteren kann ein Sternkoppler 201 auch selbst Ethernet Nachrichten generieren und an Rechenknoten 101 - 105 versenden.

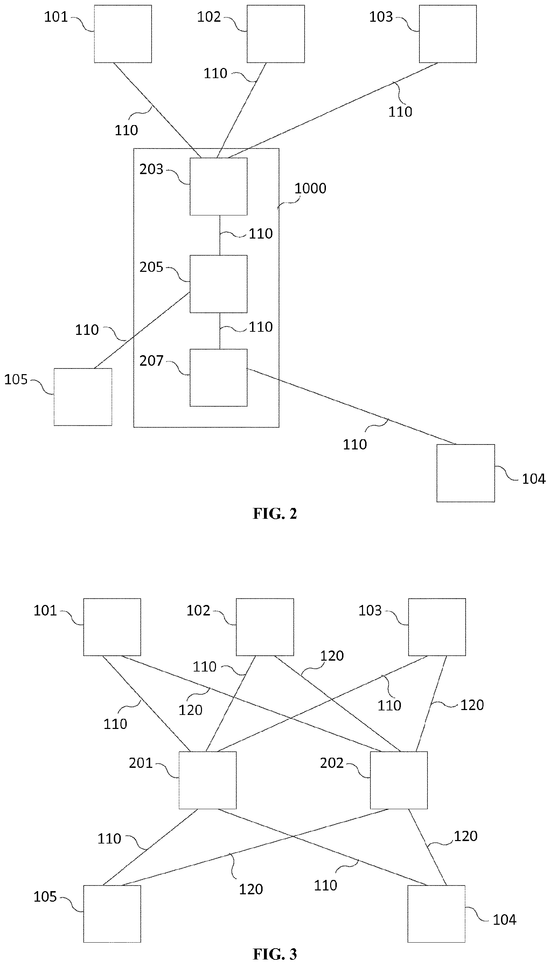

In Fig. 2 dargestellt ist, dass auch mehrere Sternkoppler 201 miteinander verbunden werden können und Rechenknoten 101 - 105 nur mit einer Teilmenge dieser Sternkoppler 203, 205, 207 verbunden wird. Die Kommunikation zwischen zwei Rechenknoten kann dann auch über zwei oder mehr Sternkoppler 203, 205, 207 erfolgen. Solche Netzwerkstrukturen werden Multi-Hop Netzwerke 1000 genannt. In der folgenden Beschreibung wird nicht explizit auf Multi-Hop Netzwerke eingegangen, es ist aber Stand der Technik, dass einzelne Sternkoppler 201 (Fig. 1) durch ein Multi-Hop Netzwerk 1000 ersetzt werden können (Fig. 2).

In Fig. 3 ist ein Beispiel eines Ethernet Netzwerks dargestellt, in dem Rechenknoten 101 -105 mittels redundanter bi-direktionaler Kommunikationsleitungen 110, 120 mit redundanten Sternkopplern 201, 202 verbunden sind. Rechenknoten können nun über beide Sternkoppler 201, 202 miteinander, auch gleichzeitig, kommunizieren. Das heißt, dass die Redundanz in diesem Netzwerk den Ausfall einzelner Komponenten toleriert. Wenn zum Beispiel Rechenknoten 101 mit Rechenknoten 102 kommunizieren möchte so kann er Nachrichten sowohl an den Sternkoppler 201 als auch an den Sternkoppler 202 schicken. Im fehlerfreien Fall leiten dann beide Sternkoppler 201 und 202 die Nachrichten an den Rechenknoten 102 weiter. Wird jedoch einer der beiden Sternkoppler 201 oder 202 fehlerhaft, so ist jedenfalls garantiert, dass der jeweils nicht fehlerhafte Sternkoppler 201 oder 202 die Nachrichten des Rechenknoten 101 zuverlässig an den Rechenknoten 202 weiterleitet.

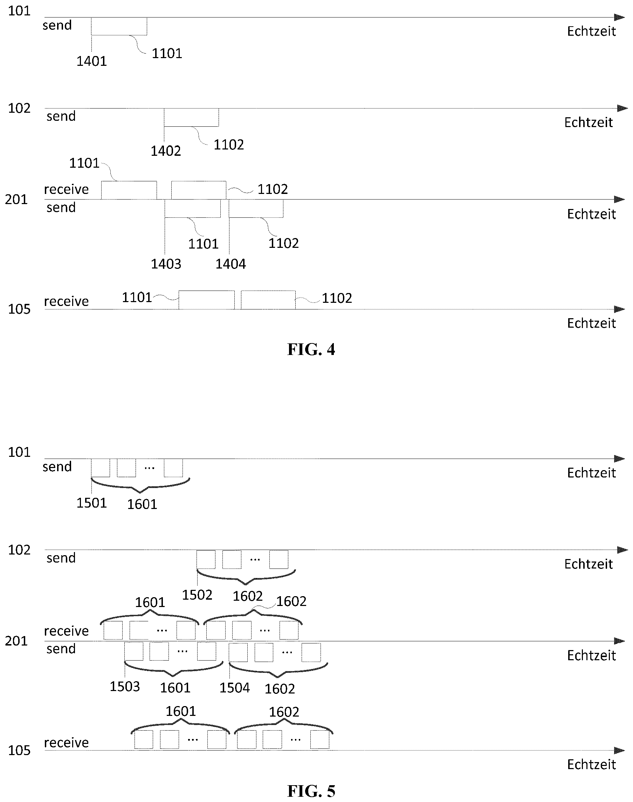

In Fig. 4 ist ein Beispiel anhand eines Flussdiagramms dargestellt, welches zeitgesteuerte Kommunikation illustriert. In dem Beispiel übertragen die Rechenknoten 101 und 102, wie in Fig. 1 dargestellt, zeitgesteuert Nachrichten 1101 und 1102 über den Sternkoppler 201 an den Rechenknoten 105. Die Besonderheit einer zeitgesteuerten Kommunikation liegt darin, dass die Sendezeitpunkte 1401, 1402 und/oder die Weiterleitungszeitpunkte 1403, 1404 der zeitgesteuerten Nachrichten bereits vor dem Versenden der Nachricht bekannt sind. Die Sendezeitpunkte 1401, 1402 und/oder die Weiterleitungszeitpunkte 1403, 1404 können zum Beispiel bereits während des Designs des verteilten Echtzeitsystems festgelegt werden. Die Festlegung der Sendezeitpunkte, Weiterleitungszeitpunkte, Empfangszeitpunkte oder eine Teilmenge davon wird als das *Kommunikationsschedule* bezeichnet.

In Fig. 5 ist ein weiteres Beispiel anhand eines Flussdiagramms dargestellt, welches zeitgesteuerte Kommunikation illustriert. Im Unterschied zu Fig. 4 werden in Fig. 5 einem Sendezeitpunkt 1501, 1502 und einem Weiterleitungszeitpunkt 1503, 1504 jeweils Gruppen 1601, 1602 von zeitgesteuerten Nachrichten zugeordnet. Wie in Fig. 5 dargestellt bleibt die Zuordnung von Nachricht zu Gruppe 1601, 1602 bestehen. Das ist nicht notwendigerweise der Fall, so könnte der Sternkoppler 201 nur den Weiterleitungszeitpunkt 1503 implementieren und, wenn der Weiterleitungszeitpunkt 1503 erreicht ist, alle Nachrichten der Gruppen 1601 und 1602 weiterleiten. Im Allgemeinen kann sich Zuordnung von Nachricht zu einer Gruppe pro Rechenknoten und Sternkoppler beliebig neu gestalten.

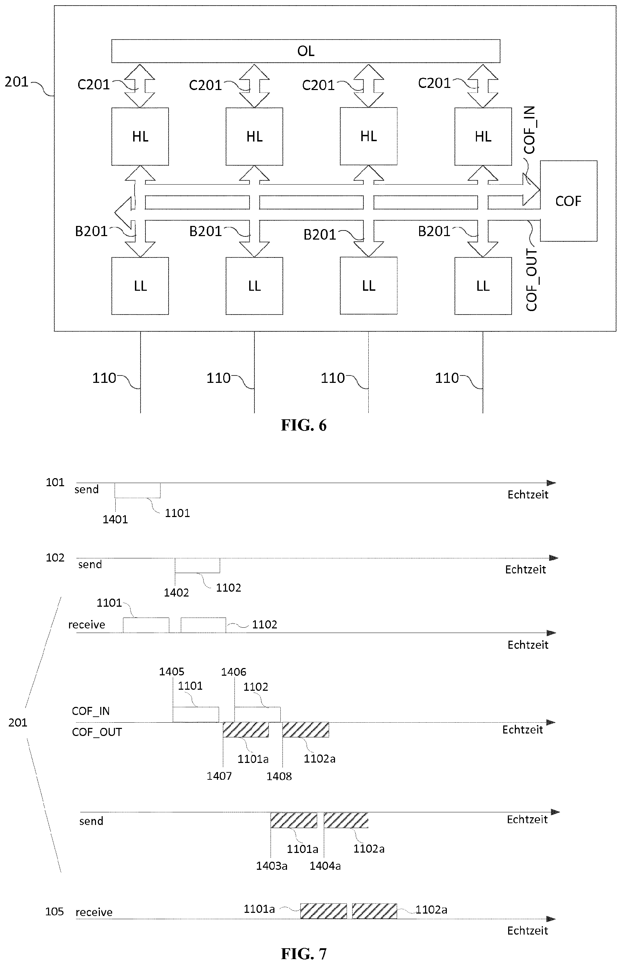

In Fig. 6 ist ein Beispiel eines Teils der inneren Struktur eines Sternkopplers 201 dargestellt. Der Sternkoppler 201 ist mittels Kommunikationsleitungen 110 mit Rechenknoten oder anderen Sternkopplern verbunden, empfängt über diese Kommunikationsleitungen 110 Ethernet Nachrichten, und leitet an diese Kommunikationsleitungen 110 empfangene Ethernet Nachrichten weiter. Des Weiteren kann der Sternkoppler 201 auch selbst Ethernet Nachrichten generieren, die er dann über die Kommunikationsleitungen 110 versendet. In Fig. 6 sind beispielhaft vier Kommunikationsleitungen 110 dargestellt, über die der Sternkoppler 201 kommuniziert. Der Einfachheit halber wird in der folgenden Beschreibung nicht zwischen einzelnen Daten innerhalb einer Ethernet Nachricht und einer Ethernet Nachricht als Ganzes unterschieden, sondern der Fall beschrieben bei dem jeweils die komplette Ethernet Nachricht verarbeitet wird. Die Prinzipien die beschrieben werden sind auch direkt anwendbar wenn nur Teile der Ethernet Nachricht verarbeitet werden.

Entsprechend der beispielhaften Anzahl der Kommunikationsleitungen 110 implementiert der Sternkoppler 201 in Fig. 6 beispielhaft pro Kommunikationsleitung 110 eine untere Kommunikationsschicht LL sowie eine obere Kommunikationsschicht HL, wobei die untere Kommunikationsschicht LL über ein Interface B201 Ethernet Nachrichten (oder Teile der Ethernet Nachrichten) mit der obere Kommunikationsschicht HL austauscht. Des Weiteren ist eine übergeordnete Schicht OL dargestellt, die die Ethernet Nachrichten (oder Teile davon) von der oberen Kommunikationsschicht HL über ein Interface C201 entgegennimmt und weiterleitet, sodass im Gesamten Ethernet Nachrichten, die von einer Kommunikationsleitung 110 empfangen werden, an Kommunikationsleitungen 110 weitergeleitet werden.

Des Weiteren ist in Fig. 6 auch eine Rechenfunktion, insbesondere eine rechenaufwändige Funktion COF dargestellt, zum Beispiel eine Funktion zum Zweck der Entschlüsselung und/oder der Verschlüsselung von Daten. Wie dargestellt ist die rechenaufwändige Funktion COF genau einmal im Sternkoppler 201 implementiert, kann aber auch mehrfach implementiert sein.

Ethernet Nachrichten (oder Teile davon), die von den Kommunikationsleitungen 110 empfangen werden, können zum Beispiel von den unteren Kommunikationsschichten LL über einen Informationskanal COF_IN an die rechenaufwändige Funktion COF geschickt werden, die diese Ethernet Nachrichten (oder Teile davon) dann als Eingabe Parameter (Eingabeparameter) verwendet. Die rechenaufwändige Funktion COF verarbeitet die Ethernet Nachricht und liefert die modifizierte Ethernet Nachricht über einen Informationskanal COF_OUT an die oberen Kommunikationsschichten HL. Die oberen Kommunikationsschichten HL liefern dann die modifizierte Ethernet Nachricht (oder Teile davon) an die übergeordnete Kommunikationsschicht OL.

Ethernet Nachrichten (oder Teile davon), die zu versenden sind, können von den oberen Kommunikationsschichten HL über den Informationskanal COF_IN an die rechenaufwändige Funktion COF gesendet werden, die diese dann als Eingabe Parameter verwendet. Die rechenaufwändige Funktion COF modifiziert die Ethernet Nachricht oder Teile davon und schickt über den Informationskanal COF_OUT die modifizierte Ethernet Nachricht (oder Teile davon) an die unteren Kommunikationsschichten LL.

Die Zeitpunkte, wann die Ethernet Nachrichten (oder Teile von diesen) von den Kommunikationsschichten HL, LL and die Funktion COF oder deren mehrfache Implementierung geschickt werden und/oder die Zeitpunkte, wann die Funktion COF die Ethernet Nachrichten (oder Teile von diesen) verarbeitet und an die jeweiligen Kommunikationsschichten HL, LL ausgibt, sind also durch das Kommunikationsschedule festgelegt. Darüberhinausgehend können die Weiterleitungen und/oder das Verarbeiten der Ethernet Nachrichten (oder Teile davon) auch direkt von der gemeinsamen Zeitbasis aktiviert werden. D.h., als Beispiel, dass die Funktion COF nicht rein dadurch ausgeführt wird, dass Ethernet Nachrichten (oder Teile davon) als Eingabe zur Verfügung stehen, sondern dadurch, dass auch die gemeinsame Zeitbasis einen vorgegebenen Zeitpunkt erreicht.

In Fig. 7 ist beispielhaft ein Kommunikationsszenario dargestellt, in dem der Sternkoppler 201 eine rechenaufwändige Funktion COF implementiert. Der Sternkoppler 201 empfängt von den Rechenknoten 101 und 102 zeitgesteuerte Nachrichten 1101, 1102, die zu den jeweiligen Zeitpunkten 1401 und 1402 von den Rechenknoten versendet werden. Wie dargestellt werden die Ethernet Nachrichten von dem Sternkoppler 201 empfangen und vor dem Weiterleiten an die rechenaufwändige Funktion CFO gesendet, zu den gegebenen Zeitpunkten 1405 und 1406. Die rechenaufwändige Funktion COF empfängt die Ethernet Nachrichten 1101 und 1102 (oder Teile davon) zu den Zeitpunkten 1405 und 1406. Die rechenaufwändige Funktion COF modifiziert die Ethernet Nachrichten 1101, 1102 (oder Teile davon), und stellt die modifizierten Ethernet Nachrichten 1101a, 1102a (oder Teile davon) am Informationskanal COF_OUT zur Verfügung. Die modifizierten Ethernet Nachrichten 1101a, 1102a werden in Folge an den Rechenknoten 105 zu den Zeitpunkten 1403a und 1404a über die Kommunikationsleitung 110 versendet.

Wie in Fig. 7 zu erkennen sind die Zeitpunkte, zu denen die rechenaufwändige Funktion COF die Ethernet Nachrichten empfängt, an die Zeitpunkte des Kommunikationsschedules (d.h. die Sendezeitpunkte der Nachrichten 1401, 1402) gekoppelt. Die Erfindung nutzt diese Koppelung aus, um die Anzahl der gleichen rechenaufwändigen Funktion COF, die in einem Sternkoppler 201 implementiert werden, zu minimieren. In Fig. 7 ist die Koppelung dergestalt, dass eine rechenaufwändige Funktion COF ausreicht, da das Kommunikationsschedule dergestalt gewählt ist, dass zu jedem Zeitpunkt nur genau eine Ethernet Nachricht (oder ein Teil davon) von der rechenaufwändigen Funktion COF behandelt werden muss.

Generell erzwingt die Kopplung der Nutzung der rechenaufwändigen Funktion COF an das Kommunikationsschedule Bedingungen, die von dem Kommunikationsschedule eingehalten werden müssen. Die Bedingungen sind die folgenden:
a) zu keinem Zeitpunkt dürfen mehr Ethernet Nachrichten (oder Teile der Nachrichten) an die rechenaufwändige Funktion COF geliefert werden oder von der COF bereits bearbeitet werden, als die rechenaufwändige Funktion gleichzeitig bearbeiten kann,
b) die Sendezeitpunkte und/oder Weiterleitungszeitpunkte und/oder Empfangszeitpunkte von Ethernet Nachrichten die im Kommunikationsschedule definiert werden müssen derart gewählt werden, sodass der zeitliche Abstand vom Empfang einer zeitgesteuerten Ethernet Nachricht in einem Sternkoppler 201 zu deren Bearbeitung 1405, 1406 durch die rechenaufwändige Funktion COF eine gegebene Dauer nicht übersteigt,
c) die Sendezeitpunkte und/oder Weiterleitungszeitpunkte und/oder Empfangszeitpunkte von Ethernet Nachrichten die im Kommunikationsschedule definiert werden müssen derart gewählt werden, sodass der zeitliche Abstand vom Empfang einer zeitgesteuerten Ethernet Nachricht in einem Sternkoppler 201 zu deren Bearbeitung 1405, 1406 durch die rechenaufwändige Funktion COF eine gegebene Dauer nicht unterschreitet.

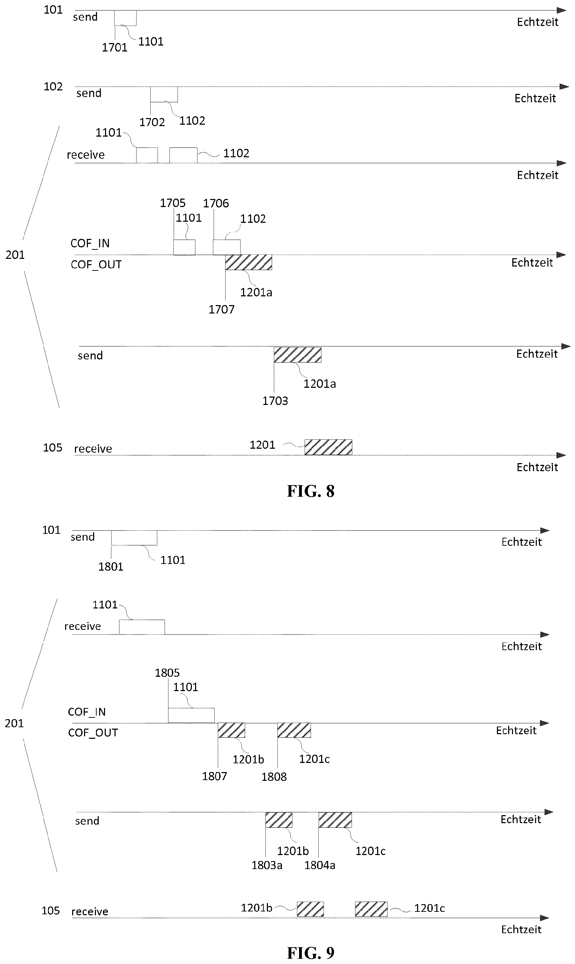

In Fig. 8 ist beispielhaft ein Kommunikationsszenario dargestellt, in dem die Funktion COF zwei Ethernet Nachrichten 1101 und 1102 als Eingabe akzeptiert und aus den beiden Ethernet Nachrichten 1101 und 1102 eine einzige Ethernet Nachricht 1201a generiert. Die Zeitpunkte 1701, 1702 des Sendens der Nachrichten 1101, 1102 sowie die Zeitpunkte der Weiterleitung 1705 und 1706 (über Informationskanal COF_IN) zur Funktion COF sowie der Ausgabe 1707 der generierten Ethernet Nachricht 1201a über Informationskanal COF_OUT der Funktion COF werden durch das Kommunikationsschedule bestimmt. Des Weiteren kann auch der Zeitpunkt 1703 des Weiterleitens der Nachricht 1201a zum Rechenknoten 105 durch das Kommunikationsschedule bestimmt werden.

In Fig. 9 ist beispielhaft ein Kommunikationsszenario dargestellt, in dem die Funktion COF eine Ethernet Nachrichten 1101 als Eingabe akzeptiert und aus der einen Ethernet Nachricht 1101 zwei Ethernet Nachricht 1201b und 1201c generiert. Die Zeitpunkte des Sendens der Nachricht 1801 sowie die der Weiterleitung 1805 (über Informationskanal COF_IN) zur Funktion COF sowie der Ausgabe 1807, 1808 über Informationskanal COF_OUT der Funktion COF werden durch das Kommunikationsschedule bestimmt. Des Weiteren können auch der Zeitpunkt 1803a und 1804a des Weiterleitens der Nachrichten 1201b und 1201c zum Rechenknoten 105 durch das Kommunikationsschedule bestimmt werden.

## Patentansprüche

1. Verfahren zur Übertragung von Nachrichten in einem Computernetzwerk, wobei das Computernetzwerk Rechenknoten (101-105) umfasst, welche Rechenkoten (101-105) über zumindest einen Sternkoppler (201) und/oder zumindest ein Multi-Hop Netzwerk (1000) miteinander verbunden sind, wobei jeder Rechenknoten (101-105) über zumindest eine Kommunikationsleitung (110) mit dem zumindest einen Sternkoppler (201) und/oder dem zumindest einen Multi-Hop Netzwerk (1000) verbunden ist, und wobei die Rechenknoten (101-105) untereinander und mit dem zumindest einen Sternkoppler (201) und/oder dem zumindest einen Multi-Hop Netzwerk (1000) Ethernet-Nachrichten austauschen, wobei
a) zumindest ein Teil, z.B. eine, zwei, mehrere oder alle der Ethernet Nachrichten zeitgesteuert kommuniziert werden, und
b) zumindest ein Sternkoppler (201, 202, 203, 205, 207) zumindest eine Funktion (COF) implementiert, wobei die zumindest eine Funktion (COF) eine, zwei, oder mehrere zeitgesteuerte Ethernet Nachrichten, und/oder Teile von ein, zwei oder mehreren Ethernet Nachrichten, als Eingabe Parameter verwendet und als Ausgabe ein, zwei, oder mehr Ethernet Nachrichten und/oder Teile von ein, zwei, oder mehreren Ethernet Nachrichten generiert, **dadurch gekennzeichnet, dass** die von der Funktion (COF) erzeugte eine oder die erzeugten zwei oder mehreren Ethernet Nachrichten nicht identisch sind mit der oder den Ethernet Nachrichten, welche als Eingabe Parameter für die Erzeugung dieser zumindest einen erzeugten Ethernet Nachricht verwendet wird/werden, und
c) für zumindest einen Teil, z.B. für eine, zwei, mehrere oder alle der zeitgesteuert kommunizierten Ethernet Nachrichten die zeitliche Nutzung der Funktion (COF) und/oder deren mehrfache Implementierung im Sternkoppler (201) an das Kommunikationsschedule der zeitgesteuerten Nachrichten gekoppelt ist, sodass die zeitliche Nutzung der Funktion (COF) und/oder deren mehrfachen Implementierung, zumindest teilweise, durch das Kommunikationsschedule der zeitgesteuerten Nachrichten vorgegeben ist, und wobei
die Kopplung des Kommunikationsschedules an die Nutzung der Funktion (COF) und/oder deren mehrfache Implementierung im Sternkoppler (201, 202, 203, 205, 207) derart gestaltet ist, dass eine oder mehrere der folgenden Bedingungen zutreffen:
a) zu keinem Zeitpunkt werden mehr Ethernet Nachrichten oder Teile dieser Ethernet Nachrichten an die Funktion (COF) geliefert oder von der Funktion (COF) bereits bearbeitet, als die Funktion (COF) gleichzeitig bearbeiten kann;
b) die Sendezeitpunkte und/oder Weiterleitungszeitpunkte und/oder Empfangszeitpunkte von Ethernet Nachrichten, die im Kommunikationsschedule definierbar sind, sind derart gewählt, dass der zeitliche Abstand vom Empfang einer zeitgesteuerten Ethernet Nachricht in einem Sternkoppler (201, 202, 203, 205, 207) zu deren Bearbeitung (1405, 1406) durch die Funktion (COF) eine gegebene Dauer nicht überschreitet;
c) die Sendezeitpunkte und/oder Weiterleitungszeitpunkte und/oder Empfangszeitpunkte von Ethernet Nachrichten, die im Kommunikationsschedule definierbar sind, derart gewählt sind, dass der zeitliche Abstand vom Empfang einer zeitgesteuerten Ethernet Nachricht in einem Sternkoppler (201, 202, 203, 205, 207) zu deren Bearbeitung (1405, 1406) durch die Funktion (COF) eine gegebene Dauer nicht unterschreitet.

2. Verfahren nach Anspruch 1, **dadurch gekennzeichnet, dass** ein Sternkoppler (201) eine Anzahl von funktional äquivalenten Funktionen (COF) implementiert, wobei diese Anzahl kleiner ist als die Anzahl der Komponenten, mit welchen dieser Sternkoppler (201) gleichzeitig direkt verbunden sein kann, wobei vorzugsweise funktional äquivalente Funktionen (COF) identische Funktionen sind.

3. Verfahren nach Anspruch 1 oder 2, **dadurch gekennzeichnet, dass** ein Sternkoppler (201, 202, 203, 205, 207) zusätzlich zu der Anzahl von funktional äquivalenten, insbesondere identischen Funktionen (COF), insbesondere funktional äquivalenten rechenaufwändigen, beispielsweise identischen rechenaufwändigen Funktionen (COF), die für zeitgesteuerte Ethernet Nachrichten oder Teile der Ethernet Nachrichten verwendet werden, auch eine, zwei oder mehrere dieser Funktionen (COF) implementiert, die von nicht zeitgesteuerten Ethernet Nachrichten verwendet werden können.

4. Verfahren nach einem der Ansprüche 1 bis 3, **dadurch gekennzeichnet, dass** es sich bei der zumindest einen bzw. bei den zwei oder mehreren Funktionen (COF) um eine Funktion bzw. um Funktionen handelt, die den Inhalt zumindest eines Teils der zeitgesteuerten Ethernet Nachrichten, welche als Eingabe Parameter verwendet werden, nach einem kryptographischen Algorithmus verschlüsselt bzw. verschlüsseln.

5. Verfahren nach einem der Ansprüche 1 bis 4, **dadurch gekennzeichnet, dass** es sich bei der zumindest einen bzw. bei den zwei oder mehreren Funktionen (COF) um eine Funktion bzw. um Funktionen handelt, die den Inhalt zumindest eines Teils der zeitgesteuerten Ethernet Nachrichten nach einem kryptographischen Algorithmus entschlüsselt bzw. entschlüsseln.

6. Verfahren nach einem der Ansprüche 1 bis 5, **dadurch gekennzeichnet, dass** es sich bei der zumindest einen bzw. bei den zwei oder mehreren Funktionen (COF) um eine Funktion bzw. um Funktionen handelt, die den Inhalt von ein, zwei, oder mehreren zeitgesteuerten Ethernet Nachrichten in ein, zwei, oder mehrere neue Ethernet Nachrichten verpackt bzw. verpacken, wobei vorzugsweise die neuen Ethernet Nachrichten nicht ident sind mit den ursprünglichen Ethernet Nachrichten.

7. Verfahren nach einem der Ansprüche 1 bis 6, **dadurch gekennzeichnet, dass** in einem Sternkoppler die Weiterleitung(en) von/zu der Funktion (COF) oder ihren mehrfachen Implementierungen und/oder das Verarbeiten der Ethernet Nachrichten oder Teilen der Ethernet Nachrichten in der Funktion (COF) dadurch aktiviert wird, dass die gemeinsame Zeitbasis vorgegebene Werte erreicht.

8. Computernetzwerk zur Übertragung von Nachrichten, wobei das Computernetzwerk Rechenknoten (101-105) und zumindest einen Sternkoppler umfasst, wobei die Rechenknoten (101-105) über den zumindest einen Sternkoppler (201) und/oder zumindest ein Multi-Hop Netzwerk (1000) miteinander verbunden sind, wobei jeder Rechenknoten (101-105) über zumindest eine Kommunikationsleitung (110) mit dem zumindest einen Sternkoppler (201) und/oder dem zumindest einen Multi-Hop Netzwerk (1000) verbunden ist, und wobei die Rechenknoten (101-105) dazu ausgebildet sind, untereinander und mit dem zumindest einen Sternkoppler (201) und/oder dem zumindest einen Multi-Hop Netzwerk (1000) Ethernet-Nachrichten auszutauschen, wobei
a) zumindest ein Teil, z.B. eine, zwei, mehrere oder alle der Ethernet Nachrichten zeitgesteuert kommuniziert werden, und
b) zumindest ein Sternkoppler (201, 202, 203, 205, 207) dazu ausgebildet ist, zumindest eine Funktion (COF) zu implementieren, wobei die zumindest eine Funktion (COF) eine, zwei, oder mehrere zeitgesteuerte Ethernet Nachrichten, und/oder Teile von ein, zwei oder mehreren Ethernet Nachrichten, als Eingabe Parameter verwendet und als Ausgabe ein, zwei, oder mehr Ethernet Nachrichten und/oder Teile von ein, zwei, oder mehreren Ethernet Nachrichten generiert, **dadurch gekennzeichnet, dass** die von der Funktion (COF) erzeugte eine oder die erzeugten zwei oder mehreren Ethernet Nachrichten nicht identisch sind mit der oder den Ethernet Nachrichten, welche als Eingabe Parameter für die Erzeugung dieser zumindest einen erzeugten Ethernet Nachricht verwendet wird/werden, und
c) für zumindest einen Teil, z.B. für eine, zwei, mehrere oder alle der zeitgesteuert kommunizierten Ethernet Nachrichten die zeitliche Nutzung der Funktion (COF) und/oder deren mehrfache Implementierung im Sternkoppler (201) an das Kommunikationsschedule der zeitgesteuerten Nachrichten gekoppelt ist, sodass die zeitliche Nutzung der Funktion (COF) und/oder deren mehrfachen Implementierung, zumindest teilweise, durch das Kommunikationsschedule der zeitgesteuerten Nachrichten vorgegeben ist, und wobei
die Kopplung des Kommunikationsschedules an die Nutzung der Funktion (COF) und/oder deren mehrfache Implementierung im Sternkoppler (201, 202, 203, 205, 207) derart gestaltet ist, dass eine oder mehrere der folgenden Bedingungen zutreffen:
a) zu keinem Zeitpunkt werden mehr Ethernet Nachrichten oder Teile dieser Ethernet Nachrichten an die Funktion (COF) geliefert oder von der Funktion (COF) bereits bearbeitet, als die Funktion (COF) gleichzeitig bearbeiten kann;
b) die Sendezeitpunkte und/oder Weiterleitungszeitpunkte und/oder Empfangszeitpunkte von Ethernet Nachrichten, die im Kommunikationsschedule definierbar sind, sind derart gewählt, dass der zeitliche Abstand vom Empfang einer zeitgesteuerten Ethernet Nachricht in einem Sternkoppler (201, 202, 203, 205, 207) zu deren Bearbeitung (1405, 1406) durch die Funktion (COF) eine gegebene Dauer nicht überschreitet;
c) die Sendezeitpunkte und/oder Weiterleitungszeitpunkte und/oder Empfangszeitpunkte von Ethernet Nachrichten, die im Kommunikationsschedule definierbar sind, derart gewählt sind, dass der zeitliche Abstand vom Empfang einer zeitgesteuerten Ethernet Nachricht in einem Sternkoppler (201, 202, 203, 205, 207) zu deren Bearbeitung (1405, 1406) durch die Funktion (COF) eine gegebene Dauer nicht unterschreitet.

9. Computernetzwerk nach Anspruch 8, **dadurch gekennzeichnet, dass** ein Sternkoppler (201) dazu ausgebildet ist, eine Anzahl von funktional äquivalenten Funktionen (COF) zu implementieren, wobei diese Anzahl kleiner ist als die Anzahl der Komponenten, mit welchen dieser Sternkoppler (201) gleichzeitig direkt verbunden sein kann, wobei vorzugsweise funktional äquivalente Funktionen (COF) identische Funktionen sind.

10. Computernetzwerk nach Anspruch 8 oder 9, **dadurch gekennzeichnet, dass** ein Sternkoppler (201, 202, 203, 205, 207) dazu ausgebildet ist, zusätzlich zu der Anzahl von funktional äquivalenten, insbesondere identischen Funktionen (COF), insbesondere funktional äquivalenten rechenaufwändigen, beispielsweise identischen rechenaufwändigen Funktionen (COF), die für zeitgesteuerte Ethernet Nachrichten oder Teile der Ethernet Nachrichten verwendet werden, auch eine, zwei oder mehrere dieser Funktionen (COF) zu implementieren, die von nicht zeitgesteuerten Ethernet Nachrichten verwendet werden können.

11. Computernetzwerk nach einem der Ansprüche 8 bis 10, **dadurch gekennzeichnet, dass** es sich bei der zumindest einen bzw. bei den zwei oder mehreren Funktionen (COF) um eine Funktion bzw. um Funktionen handelt, die den Inhalt zumindest eines Teils der zeitgesteuerten Ethernet Nachrichten, welche als Eingabe Parameter verwendet werden, nach einem kryptographischen Algorithmus verschlüsselt bzw. verschlüsseln.

12. Computernetzwerk nach einem der Ansprüche 8 bis 11, **dadurch gekennzeichnet, dass** es sich bei der zumindest einen bzw. bei den zwei oder mehreren Funktionen (COF) um eine Funktion bzw. um Funktionen handelt, die den Inhalt zumindest eines Teils der zeitgesteuerten Ethernet Nachrichten nach einem kryptographischen Algorithmus entschlüsselt bzw. entschlüsseln.

13. Computernetzwerk nach einem der Ansprüche 8 bis 12, **dadurch gekennzeichnet, dass** es sich bei der zumindest einen bzw. bei den zwei oder mehreren Funktionen (COF) um eine Funktion bzw. um Funktionen handelt, die den Inhalt von ein, zwei, oder mehreren zeitgesteuerten Ethernet Nachrichten in ein, zwei, oder mehrere neue Ethernet Nachrichten verpackt bzw. verpacken, wobei vorzugsweise die neuen Ethernet Nachrichten nicht ident sind mit den ursprünglichen Ethernet Nachrichten.

14. Computernetzwerk nach einem der Ansprüche 8 bis 13, **dadurch gekennzeichnet, dass** in einem Sternkoppler die Weiterleitung(en) von/zu der Funktion (COF) oder ihren mehrfachen Implementierungen und/oder das Verarbeiten der Ethernet Nachrichten oder Teilen der Ethernet Nachrichten in der Funktion (COF) dadurch aktiviert wird, dass die gemeinsame Zeitbasis vorgegebene Werte erreicht.

## Claims

1. Method for transmitting messages within a computer network, wherein the computer network comprises computing nodes (101-105), which computing nodes (101-105) are interconnected via at least one star coupler (201) and/or at least one multi-hop network (1000), each computing node (101-105) being connected to the at least one star coupler (201) and/or the at least one multi-hop network (1000) via at least one communication line (110), and the computing nodes (101-105) exchanging Ethernet messages with each other and with the at least one star coupler (201) and/or the at least one multi-hop network (1000), wherein
a) at least a portion, e.g., one, two, more or all, of the Ethernet messages are communicated in a time-controlled manner, and
b) at least one star coupler (201, 202, 203, 205, 207) implements at least one function (COF), wherein the at least one function (COF) uses one, two, or more time-controlled Ethernet messages, and/or parts of one, two, or more Ethernet messages, as input parameters and generates one, two, or more Ethernet messages and/or parts of one, two, or more Ethernet messages as output, **characterized in that** the one, two or more Ethernet messages generated by the function (COF) are not identical with the Ethernet message(s) used as input parameters for the generation of said at least one generated Ethernet message; and
c) for at least a part, e.g. for one, two, several or all of the time-controlled communicated Ethernet messages, the time-related use of the function (COF) and/or its multiple implementation in the star coupler (201) is coupled to the communication schedule of the time-controlled messages, so that the timing of the function (COF) and/or its multiple implementation is, at least partly, predetermined by the communication schedule of the time-controlled messages, and wherein
the coupling of the communication schedule to the use of the function (COF) and/or its multiple implementation in the star coupler (201, 202, 203, 205, 207) is such that one or more of the following conditions apply:
a) at no time more Ethernet messages or parts of these Ethernet messages are delivered to the function (COF) or already processed by the function (COF) than the function (COF) is able to process simultaneously;
b) the transmission times and/or forwarding times and/or receiving times of Ethernet messages, which are definable in the communication schedule, are selected such that the time interval from receiving a time-controlled Ethernet message in a star coupler (201, 202, 203, 205, 207) to processing thereof (1405, 1406) by the function (COF) does not exceed a determined duration;
c) the transmission times and/or forwarding times and/or reception times of Ethernet messages, which are definable in the communication schedule, are selected such that the time interval from receiving a time-controlled Ethernet message in a star coupler (201, 202, 203, 205, 207) to processing thereof (1405, 1406) by the function (COF) does not fall below a given duration.

2. Method according to claim 1, **characterized in that** a star coupler (201) implements a number of functionally equivalent functions (COF), said number being smaller than the number of components to which said star coupler (201) can be directly connected simultaneously, wherein preferably functionally equivalent functions (COF) are identical functions.

3. Method according to claim 1 or 2, **characterized in that** a star coupler (201, 202, 203, 205, 207) implements, in addition to the number of functionally equivalent, in particular identical, functions (COF), in particular functionally equivalent computationally expensive, for example identical, computationally expensive functions (COF), which are used for time-controlled Ethernet messages or parts of Ethernet messages, also one, two or more of said functions (COF) which can be used by non-time-controlled Ethernet messages.

4. Method according to any one of claims 1 to 3, **characterized in that** the at least one, two or more functions (COF) is a function / are functions encrypting, according to a cryptographic algorithm, the content of at least part of the time-controlled Ethernet messages which are used as input parameters.

5. Method according to any one of claims 1 to 4, **characterized in that** the at least one, two or more functions (COF) is a function / are functions decrypting, according to a cryptographic algorithm, the content of at least part of the time-controlled Ethernet messages.

6. Method according to any one of claims 1 to 5, **characterized in that** the at least one, two or more functions (COF) is a function / are functions packaging the content of one, two, or more time-controlled Ethernet messages into one, two, or more new Ethernet messages, wherein preferably the new Ethernet messages are not identical to the original Ethernet messages.

7. Method according to any of claims 1 to 6, **characterized in that** in a star coupler the forwarding(s) from/to the function (COF) or its multiple implementations and/or the processing of the Ethernet messages or parts of the Ethernet messages in the function (COF) is activated by the common time base reaching predetermined values.

8. A computer network for transmitting messages, wherein the computer network comprises computing nodes (101-105) and at least one star coupler, wherein the computing nodes (101-105) are interconnected via the at least one star coupler (201) and/or at least one multi-hop network (1000), each computing node (101-105) being connected to the at least one star coupler (201) and/or the at least one multi-hop network (1000) via at least one communication line (110), and the computing nodes (101-105) being configured to exchange Ethernet messages with each other and with the at least one star coupler (201) and/or the at least one multi-hop network (1000), wherein
a) at least a part, e.g. one, two, more or all of the Ethernet messages are communicated in a time-controlled manner, and
b) at least one star coupler (201, 202, 203, 205, 207) is configured to implement at least one function (COF), wherein the at least one function (COF) uses one, two, or more time-controlled Ethernet messages, and/or parts of one, two, or more Ethernet messages, as input parameters and generates one, two, or more Ethernet messages and/or parts of one, two, or more Ethernet messages as output, **characterized in that** the one, two or more Ethernet messages generated by the function (COF) are not identical with the Ethernet message(s) used as input parameters for the generation of said at least one generated Ethernet message, and
c) for at least a part, e.g. for one, two, several or all of the time-controlled communicated Ethernet messages, the time-related use of the function (COF) and/or its multiple implementation in the star coupler (201) is coupled to the communication schedule of the time-controlled messages, so that the timing of the function (COF) and/or its multiple implementation is, at least partly, predetermined by the communication schedule of the time-controlled messages, and wherein
the coupling of the communication schedule to the use of the function (COF) and/or its multiple implementation in the star coupler (201, 202, 203, 205, 207) is such that one or more of the following conditions apply:
a) at no time are more Ethernet messages or parts of these Ethernet messages delivered to the function (COF) or already processed by the function (COF) than the function (COF) is able to process simultaneously;
b) the transmission times and/or forwarding times and/or receiving times of Ethernet messages, which are definable in the communication schedule, are selected such that the time interval from receiving a time-controlled Ethernet message in a star coupler (201, 202, 203, 205, 207) to processing thereof (1405, 1406) by the function (COF) does not exceed a given duration;
c) the transmission times and/or forwarding times and/or receiving times of Ethernet messages, which are definable in the communication schedule, are selected such that the time interval from receiving a time-controlled Ethernet message in a star coupler (201, 202, 203, 205, 207) to processing thereof (1405, 1406) by the function (COF) does not fall below a given duration.

9. Computer network according to claim 8, **characterized in that** a star coupler (201) is configured to implement a number of functionally equivalent functions (COF), said number being smaller than the number of components to which said star coupler (201) can be directly connected simultaneously, wherein preferably functionally equivalent functions (COF) are identical functions.

10. Computer network according to claim 8 or 9, **characterized in that** a star coupler (201, 202, 203, 205, 207) is configured to implement, in addition to the number of functionally equivalent, in particular identical, functions (COF), in particular functionally equivalent computationally expensive, for example identical, computationally expensive functions (COF), which are used for time-controlled Ethernet messages or parts of Ethernet messages, also one, two or more of said functions (COF) which can be used by non-time-controlled Ethernet messages.

11. Computer network according to any one of claims 8 to 10, **characterized in that** the at least one, two or more functions (COF) is a function / are functions encrypting, according to a cryptographic algorithm, the content of at least part of the time-controlled Ethernet messages which are used as input parameters

12. Computer network according to any one of claims 8 to 11, **characterized in that** the at least one, two or more functions (COF) is a function / are functions decrypting, according to a cryptographic algorithm, the content of at least part of the time-controlled Ethernet messages.

13. Computer network according to any one of claims 8 to 12, **characterized in that** the at least one, two or more functions (COF) is a function / are functions packaging the content of one, two, or more time-controlled Ethernet messages into one, two, or more new Ethernet messages, wherein preferably the new Ethernet messages are not identical to the original Ethernet messages.

14. Computer network according to any of claims 8 to 13, **characterized in that** in a star coupler the forwarding(s) from/to the function (COF) or its multiple implementations and/or the processing of the Ethernet messages or parts of the Ethernet messages in the function (COF) is activated by the common time base reaching predetermined values.

## Revendications

1. Procédé de transmission de messages dans un réseau informatique, ledit réseau informatique comportant des nœuds de calcul (101-105), lesquels nœuds de calcul (101-105) sont interconnectés via au moins un coupleur en étoile (201) et/ou au moins un réseau multi-hop (1000), chaque nœud de calcul (101-105) étant connecté à l'au moins un coupleur en étoile (201) et/ou à l'au moins un réseau multi-hop (1000) par l'intermédiaire d'au moins une ligne de communication (110), et les nœuds de calcul (101-105) échangeant des messages Ethernet entre eux et avec l'au moins un coupleur en étoile (201) et/ou l'au moins un réseau multi-hop (1000), dans lequel
a) au moins une partie des messages Ethernet, par exemple un, deux, plusieurs, ou tous les messages Ethernet sont communiqués de manière contrôlée dans le temps, et
b) au moins un coupleur en étoile (201, 202, 203, 205, 207) met en œuvre au moins une fonction (COF), ladite au moins une fonction (COF) utilisant un, deux, ou plusieurs messages Ethernet commandés sur la base du temps, et/ou des parties d'un, deux, ou plusieurs messages Ethernet, comme paramètres d'entrée et génère en sortie un, deux, ou plusieurs messages Ethernet et/ou des parties d'un, deux, ou plusieurs messages Ethernet, **caractérisé en ce que** ledit ou lesdits deux ou plusieurs messages Ethernet générés par la fonction (COF) ne sont pas identiques au(x) message(s) Ethernet utilisé(s) comme paramètres d'entrée pour la génération dudit au moins un message Ethernet généré ; et
c) pour au moins une partie des messages Ethernet, par exemple pour un, deux, plusieurs, ou tous les messages Ethernet communiqués sur la base du temps, l'utilisation temporelle de la fonction (COF) et/ou sa mise en œuvre multiple dans le coupleur en étoile (201) est couplée au plan de communication des messages sur la base du temps, de sorte que la synchronisation de la fonction (COF) et/ou sa mise en œuvre multiple est, au moins en partie, prédéterminée par le plan de communication des messages sur la base du temps, et
le couplage du plan de communication à l'utilisation de la fonction (COF) et/ou à sa mise en œuvre multiple dans le coupleur en étoile (201, 202, 203, 205, 207) est tel qu'une ou plusieurs des conditions suivantes s'appliquent :
a) à aucun moment, le nombre de messages Ethernet ou de parties de ces messages Ethernet livrés à la fonction (COF) ou déjà traités par la fonction (COF) n'est supérieur à celui que la fonction (COF) peut traiter simultanément ;
b) les temps de transmission et/ou d'envoi et/ou de réception des messages Ethernet qui peuvent être définis dans le plan de communication sont choisis de telle sorte que l'intervalle de temps entre la réception d'un message Ethernet commandé dans le temps dans un coupleur en étoile (201, 202, 203, 205, 207) et son traitement (1405, 1406) par la fonction (COF) ne dépasse pas une durée donnée ;
c) les temps de transmission et/ou d'envoi et/ou de réception des messages Ethernet, qui peuvent être définis dans le plan de communication, sont choisis de telle sorte que l'intervalle de temps entre la réception d'un message Ethernet commandé dans le temps dans un coupleur en étoile (201, 202, 203, 205, 207) et son traitement (1405, 1406) par la fonction (COF) ne soit pas inférieur à une durée donnée.

2. Procédé selon la revendication 1, **caractérisé en ce qu'**un coupleur en étoile (201) met en œuvre un certain nombre de fonctions fonctionnellement équivalentes (COF), ledit nombre étant inférieur au nombre de composants auxquels ledit coupleur en étoile (201) peut être directement connecté simultanément, de préférence les fonctions fonctionnellement équivalentes (COF) étant des fonctions identiques.

3. Procédé selon la revendication 1 ou 2, **caractérisé en ce qu'**un coupleur en étoile (201, 202, 203, 205, 207) met en œuvre, en plus du nombre de fonctions fonctionnellement équivalentes, en particulier identiques (COF), notamment des fonctions fonctionnellement équivalentes coûteuses en calcul, par exemple des fonctions identiques coûteuses en calcul (COF) utilisées pour des messages Ethernet commandés sur la base du temps ou des parties des messages Ethernet, également une, deux ou plusieurs desdites fonctions (COF) qui peuvent être utilisées par des messages Ethernet non commandés sur la base du temps.

4. Procédé selon l'une quelconque des revendications 1 à 3, **caractérisé en ce que** ladite au moins une ou lesdites deux ou plusieurs fonctions (COF) est/sont fonction(s) cryptant le contenu d'au moins une partie des messages Ethernet commandés sur la base du temps utilisés comme paramètres d'entrée selon un algorithme cryptographique.

5. Procédé selon l'une quelconque des revendications 1 à 4, **caractérisé en ce que** ladite au moins une ou lesdites deux ou plusieurs fonctions (COF) est/sont fonction(s) décryptant le contenu d'au moins une partie des messages Ethernet commandés sur la base du temps selon un algorithme cryptographique.

6. Procédé selon l'une quelconque des revendications 1 à 5, **caractérisé en ce que** ladite au moins une ou lesdites deux ou plusieurs fonctions (COF) est/sont fonction(s) regroupant le contenu d'un, deux ou plusieurs messages Ethernet commandés sur la base du temps en un, deux ou plusieurs nouveaux messages Ethernet, de préférence les nouveaux messages Ethernet n'étant pas identiques aux messages Ethernet originaux.

7. Procédé selon l'une quelconque des revendications 1 à 6, **caractérisé en ce que**, dans un coupleur en étoile, la ou les transmission(s) depuis/vers la fonction (COF) ou ses multiples implémentations et/ou le traitement des messages Ethernet ou des parties des messages Ethernet dans la fonction (COF) sont activés par la base de temps commune atteignant des valeurs prédéterminées.

8. Réseau informatique pour la transmission de messages, ledit réseau informatique comportant des nœuds de calcul (101-105) et au moins un coupleur en étoile, lesdits nœuds de calcul (101-105) étant interconnectés via ledit au moins un coupleur en étoile (201) et/ou au moins un réseau multi-hop (1000), chaque nœud de calcul (101-105) étant connecté à l'au moins un coupleur en étoile (201) et/ou à l'au moins un réseau multi-hop (1000) par l'intermédiaire d'au moins une ligne de communication (110), et les nœuds de calcul (101-105) étant conçus pour échanger des messages Ethernet entre eux et avec l'au moins un coupleur en étoile (201) et/ou l'au moins un réseau multi-hop (1000), dans lequel
a) au moins une partie des messages Ethernet, par exemple un, deux, plusieurs, ou tous les messages Ethernet sont communiqués de manière contrôlée dans le temps, et
b) au moins un coupleur en étoile (201, 202, 203, 205, 207) met en œuvre au moins une fonction (COF), ladite au moins une fonction (COF) utilisant un, deux, ou plusieurs messages Ethernet commandés sur la base du temps, et/ou des parties d'un, deux, ou plusieurs messages Ethernet, comme paramètres d'entrée et génère en sortie un, deux, ou plusieurs messages Ethernet et/ou des parties d'un, deux, ou plusieurs messages Ethernet, **caractérisé en ce que** ledit ou lesdits deux ou plusieurs messages Ethernet générés par la fonction (COF) ne sont pas identiques au(x) message(s) Ethernet utilisé(s) comme paramètres d'entrée pour la génération dudit au moins un message Ethernet généré ; et
c) pour au moins une partie des messages Ethernet, par exemple pour un, deux, plusieurs, ou tous les messages Ethernet communiqués sur la base du temps, l'utilisation temporelle de la fonction (COF) et/ou sa mise en œuvre multiple dans le coupleur en étoile (201) est couplée au plan de communication des messages sur la base du temps, de sorte que la synchronisation de la fonction (COF) et/ou sa mise en œuvre multiple est, au moins en partie, prédéterminée par le plan de communication des messages s sur la base du temps, et
le couplage du plan de communication à l'utilisation de la fonction (COF) et/ou à sa mise en œuvre multiple dans le coupleur en étoile (201, 202, 203, 205, 207) est tel qu'une ou plusieurs des conditions suivantes s'appliquent :
a) à aucun moment, le nombre de messages Ethernet ou de parties de ces messages Ethernet livrés à la fonction (COF) ou déjà traités par la fonction (COF) n'est supérieur à celui que la fonction (COF) peut traiter simultanément ;
b) les temps de transmission et/ou d'envoi et/ou de réception des messages Ethernet qui peuvent être définis dans le plan de communication sont choisis de telle sorte que l'intervalle de temps entre la réception d'un message Ethernet commandé dans le temps dans un coupleur en étoile (201, 202, 203, 205, 207) et son traitement (1405, 1406) par la fonction (COF) ne dépasse pas une durée donnée ;
c) les temps de transmission et/ou d'envoi et/ou de réception des messages Ethernet, qui peuvent être définis dans le plan de communication, sont choisis de telle sorte que l'intervalle de temps entre la réception d'un message Ethernet commandé dans le temps dans un coupleur en étoile (201, 202, 203, 205, 207) et son traitement (1405, 1406) par la fonction (COF) ne soit pas inférieur à une durée donnée.

9. Réseau informatique selon la revendication 8, **caractérisé en ce qu'**un coupleur en étoile (201) est conçu pour mettre en œuvre un certain nombre de fonctions fonctionnellement équivalentes (COF), ledit nombre étant inférieur au nombre de composants auxquels ledit coupleur en étoile (201) peut être directement connecté simultanément, de préférence les fonctions fonctionnellement équivalentes (COF) étant des fonctions identiques.

10. Réseau informatique selon la revendication 8 ou 9, **caractérisé en ce qu'**un coupleur en étoile (201,202,203, 205, 207) est conçu pour mettre en œuvre, en plus du nombre de fonctions fonctionnellement équivalentes, en particulier identiques (COF), notamment des fonctions fonctionnellement équivalentes coûteuses en calcul, par exemple des fonctions identiques coûteuses en calcul (COF) utilisées pour des messages Ethernet commandés sur la base du temps ou des parties de messages Ethernet, également une, deux ou plusieurs desdites fonctions (COF) qui peuvent être utilisées par des messages Ethernet non commandés sur la base du temps.

11. Réseau informatique selon l'une quelconque des revendications 8 à 10, **caractérisé en ce que** ladite au moins une ou lesdites deux ou plusieurs fonctions (COF) est/sont fonction(s) cryptant le contenu d'au moins une partie des messages Ethernet commandés sur la base du temps utilisés comme paramètres d'entrée selon un algorithme cryptographique.

12. Réseau informatique selon l'une quelconque des revendications 8 à 11, **caractérisé en ce que** ladite au moins une ou lesdites deux ou plusieurs fonctions (COF) est/sont fonction(s) décryptant le contenu d'au moins une partie des messages Ethernet commandés sur la base du temps selon un algorithme cryptographique.

13. Réseau informatique selon l'une quelconque des revendications 8 à 12, **caractérisé en ce que** ladite au moins une ou lesdites deux ou plusieurs fonctions (COF) est/sont fonction(s) regroupant le contenu d'un, deux ou plusieurs messages Ethernet commandés sur la base du temps en un, deux ou plusieurs nouveaux messages Ethernet, de préférence les nouveaux messages Ethernet n'étant pas identiques aux messages Ethernet originaux.

14. Réseau informatique selon l'une quelconque des revendications 8 à 13, **caractérisé en ce que** dans un coupleur en étoile, la ou les transmission(s) depuis/vers la fonction (COF) ou ses multiples implémentations et/ou le traitement des messages Ethernet ou des parties des messages Ethernet dans la fonction (COF) sont activés par la base de temps commune atteignant des valeurs prédéterminées.
